# EUROPÄISCHE PATENTANMELDUNG

(11) **EP 1 055 921 A2**
(43) Veröffentlichungstag der Anmeldung: **29.11.2000**
(21) Anmeldenummer: 00109364.0
(22) Anmeldetag: 02.05.2000
(51) Int. Cl.: G01L 19/00

(54) **Montage eines mikromechanischen Bausteins in einem Gehäuse**

(30) Priorität: 26.05.1999 DE 19924084
(71) Anmelder: SIEMENS AKTIENGESELLSCHAFT, 80333 München (DE)
(72) Erfinder: Aigner, Robert, 81675 München (DE); Kapels, Hergen, 85579 Neubiberg (DE); Oppermann, Klaus-Günter, 83607 Holzkirchen (DE); Marksteiner, Stephan, 81739 München (DE)

(57) **Zusammenfassung**

Das Bauelement weist auf
ein Gehäuse (1), in dem mindestens einen mikromechanischen oder mikromechanisch-elektronischen Baustein (2), befestigt ist,
**dadurch gekennzeichnet, daß**
mindestens einen Graben (3) vorhanden ist, welcher in einer Oberfläche des Bausteins (2) eingebracht ist, und welcher den Baustein (2) in einen Außenbereich (21) und in einen Innenbereich (22) unterteilt, wobei der Außenbereich (21) mit dem Gehäuse (1) mechanisch verbunden ist, und mittels des mindestens einen Grabens (3) der Innenbereich (22) vom Außenbereich (21) mechanisch so entkoppelbar ist, daß eine vom Gehäuse (1) ausgehende Deformation nicht über die Oberfläche vom Außenbereich (21) auf den Innenbereich (21) übertragbar ist.

## Beschreibung

Die Erfindung betrifft ein Bauelement mit einem elektromechanischen oder elektromechanisch-elektronischen Baustein mit verbesserter mechanischer Entkoppelung des Bauelementes sowie ein Verfahren zur mechanischen Entkoppelung innerhalb eines Bauelementes.

Ein Bauelement, welches eine Oberflächenmikromechanik aufweist, unterliegt vielfach einem erheblichen Einfluß durch eine Deformation des Gehäuses, beispielsweise durch thermische oder mechanische Beanspruchungen. Trotz erheblicher Anstrengungen bei der Optimierung der Gehäuse- und Montagetechnik wird ein innerhalb des Gehäuses montierter Baustein durch die äußere Einwirkung verformt. Aufgrund der Verformung der Oberfläche des Bausteins kann eine Eigenschaft bestimmter Bauelemente verändert werden, beispielsweise ist bei einem Drucksensor ein Einfluß auf eine Empfindlichkeit und einen Offset feststellbar. Auch kann eine im Baustein induzierte Spannung einen Einfluß auf Transistor-Parameter einer mikroelektronischen Schaltung ausüben.

Eine Möglichkeit, die auf das Gehäuse des Bauelementes einwirkenden Deformationen und Spannungen von dem darin enthaltenen Baustein zu entkoppeln, besteht darin, für eine Verklebung des Bausteins im Bauelement einen vergleichsweise weichen Klebstoff zu verwenden. Wird der Baustein allerdings zu weich montiert, so treten erhebliche Probleme beim nachfolgenden Bonden auf.

Aus DE 40 12 071 ist ein Verfahren zur Ätzung von Ritzen in mehrere zusammenhängende Halbleiterwafer bekannt, mittels der eine mechanische Spannung während der Herstellung eines wafer-gebondeten Bauelementes, beispielsweise eines mikromechanischen Sensors, vermieden wird.

Aus DE 41 06 933 ist ein Verfahren zur Spannungsreduzierung auf einem Halbleiterbauelement bekannt, bei dem die Maske aus demselben Material besteht wie das Substrat, so daß eine mechanische Spannung reduziert wird.

Aus US 5,750,432 ist ein Verfahren zur Herstellung eines Grabens auf einem elektronischen Baustein bekannt, welcher eine dielektrische Schicht durchzieht. Mit Hilfe des Grabens werden spannungsindizierte lokale Gitterversetzungen nach thermischer Oxidation entlang des Grabens in einer Silicon-On-Insulator-Struktur reduziert.

Es ist die Aufgabe der vorliegenden Erfindung, Teile eines innerhalb eines Gehäuses vorhandenen Bauelementes von mechanischen Spannungen, welche durch eine Deformation des Gehäuses ausgelöst werden, zu entkoppeln.

Diese Aufgabe wird mittels eines Bauelementes nach Anspruch 1 bzw. mittels eines Verfahrens gemäß des Patentanspruchs 10 gelöst.

Das Bauelement weist ein Gehäuse auf, welches mindestens einen mikromechanischen oder mikromechanisch-elektronischen Baustein aufweist.

Ein mikromechanischer Baustein ist beispielsweise eine Anordnung mehrerer verschieden langer freischwingender Balken zur Messung einer Beschleunigung oder ein druckempfindlicher Teil eines Drucksensors in mikromechanischer Bauweise.
Ein mikromechanisch-elektronischer Baustein ist ein Baustein, welcher einerseits eine mikromechanische Struktur aufweist, beispielsweise einen mechanischen Beschleunigungsmesser, und gleichzeitig eine elektronische Struktur, beispielsweise eine Auswerteeinheit.

In die Oberfläche des Bausteins wird mindestens ein Graben, d. h. eine längliche Aussparung, eingebracht. Dieser Graben erzeugt eine freie Fläche im Baustein, durch die mechanische Spannungen und Dehnungen nicht über die Oberfläche des Bausteins übertragen werden.

Der Graben kann z. B. mittels eines Ätzvorgangs oder auch mittels mikromechanischer Bearbeitung ("micro-machining") eingebracht werden. Er kann sowohl in gebondete als auch in als Bulk vorliegende Bausteine eingebracht werden.

Mittels des mindestens einen Grabens wird der Baustein in einen Außenbereich und einen Innenbereich unterteilt.
Der Außenbereich ist mit dem Gehäuse mechanisch verbunden, so daß Deformationen des Gehäuses zu einem Spannungsaufbau in der Oberfläche des Außenbereichs führen.
Der Innenbereich ist vom Außenbereich so unterschieden, daß der Innenbereich vom Außenbereich mechanisch durch den Graben weitgehend entkoppelt ist, so daß eine vom Gehäuse ausgehende Deformation, welche eine Spannung in der Oberfläche des Außenbereichs induziert, nicht über die Oberfläche vom Außenbereich auf den Innenbereich übertragbar ist. Der Außenbereich und der Innenbereich sind somit mindestens durch mindestens einen Graben räumlich voneinander getrennt.

Dabei ist es nicht erforderlich, daß die mechanischen Spannungen im Innenbereich auf Null reduziert werden, sondern es ist eine signifikante Reduzierung des durch Deformation des Gehäuses erzeugten Spannungsniveaus ausreichend.

Mittels dieser Entkoppelung des mechanischen Spannungsübertrags vom Außenbereich in den Innenbereich wird sichergestellt, daß eine Deformation des Bauelementes nur einen vernachlässigbaren Einfluß auf die innerhalb des Innenbereichs liegenden Strukturen aufweist. Dadurch wird das Bauelement vorteilhafterweise unempfindlicher gegenüber äußeren Einflüssen, insbesondere gegenüber thermischen und mechanischen Beanspruchungen. Dadurch kann vorteilhafterweise eine konstante Arbeitsweise des Bauelementes verbessert werden.

Dabei ist es zwar nicht unbedingt notwendig, aber vorteilhaft, wenn der mindestens eine Graben den Innenbereich umrahmt. Dadurch wird eine allseitige mechanische Entkoppelung der Oberfläche zum Außenbereich hin garantiert.

Es ist aber auch möglich, nur einen Teil des Innenbereichs mit Gräben zu umgeben, wodurch sich möglicherweise eine einfachere Herstellung ergibt, andererseits aber die Abschirmung verschlechtert wird.

Bei der Umrahmung des Innenbereichs kann sowohl ein durchgehender Graben als auch ein System mehrerer Gräben verwendet werden.

Bei Umrahmung des Innenbereichs mit einem durchgängigen Graben kann eine elektrische Kontaktierung zwischen einer Struktur im Innenbereich und einer Struktur im Außenbereich mittels einer Überbrückung des Grabens durch dünne Drähte geschehen. Aufgrund des üblicherweise geringen Durchmessers sowie eines weichen Materials, z. B. Kupfer- oder Silberdrähte, bleibt die mechanische Entkoppelung in sehr guter Näherung erhalten. Allerdings ist diese Methode der Verdrahtung vergleichsweise aufwendig und möglicherweise anfällig gegenüber einer Wechselbelastung.

Es ist vorteilhaft, wenn der Innenbereich von mehreren Gräben umrahmt ist, welche in den Baustein so geschachtelt eingebracht sind, daß ein durchgängiger, gefalteter Pfad auf der Oberfläche des Bausteins zwischen Innenbereich und Außenbereich vorhanden ist. Das Vorhandensein eines solchen Pfades setzt selbstverständlich voraus, daß kein Graben durchgängig den Innenbereich umrahmt. Unter geschachtelter Anordnung wird eine Anordnung verstanden, bei der zumindest in Teilbereichen auf einer gedachten geraden Linie zwischen Außenbereich und Innenbereich zwei Gräben hintereinander angebracht sind. Unter einem gefalteten Pfad wird ein nicht geradliniger Pfad verstanden, beispielsweise ein Pfad, welcher mehrere 90°-Kurven aufweist.

Ein gefalteter Pfad kann keine Oberflächenspannungen vom Außenbereich in den Innenbereich einleiten. Er besitzt aber den Vorteil, daß auf ihm elektrische Leitungen angebracht werden können, und zwar vorteilhafterweise durch das herkömmliche Aufbringen auf die Oberfläche des Bauteils, z. B. durch Aufdampfen oder Auflöten. Dadurch entfällt eine aufwendige und kostspielige Aufbringung gesonderter Drähte. Zudem wird ein elektrischer Anschluß auf dem Pfad durch diesen mechanisch unterstützt.

Es ist vorteilhaft, wenn die laterale Ausdehnung des Innenbereichs maximal viermal so groß ist wie die Tiefe des mindestens einen Grabens, weil dadurch eine Deformation in Innenbereich um mindestens eine Dekade im Vergleich zu einem nicht mit einem Graben versehenen Baustein gesenkt werden kann.

Zweckmäßigerweise wird unter lateraler Ausdehnung des Innenbereichs diejenige Strecke verstanden, welche rechtwinklig von der Seitenwand eines Grabens bis zum einem weiteren Graben führt.

Auch ist es vorteilhaft, wenn die Tiefe des Grabens zwischen 50 µm und 500 µm liegt. Eine große Tiefe des Grabens wird besonders bevorzugt bei mikromechanischen Strukturen, welche in der Regel eine größere Tiefenausdehnung aufweisen als elektronische Strukturen.

Zur einfachen Herstellung und elektrischen Verdrahtung ist es vorteilhaft, wenn das mikromechanische oder mikromechanischelektronische Bauteil auf einer Silizium-Technologie basiert. Dies kann beispielsweise ein auf einem Siliziumsubstrat aufgebrachte elektronische Struktur und eine auf dem gleichen Wafer aufgebrachte mikromechanische Struktur sein.

In den folgenden Ausführungsbeispielen wird das Bauelement schematisch näher dargestellt:
- Figur 1: zeigt ein Bauelement in Aufsicht,
- Figur 2: zeigt einen Detailausschnitt von Figur 1, welcher den Innenbereich und die Gräben umfaßt,
- Figur 3: zeigt als Schnittdarstellung in Seitenansicht einen Ausschnitt des Bauteils mit einem Graben.

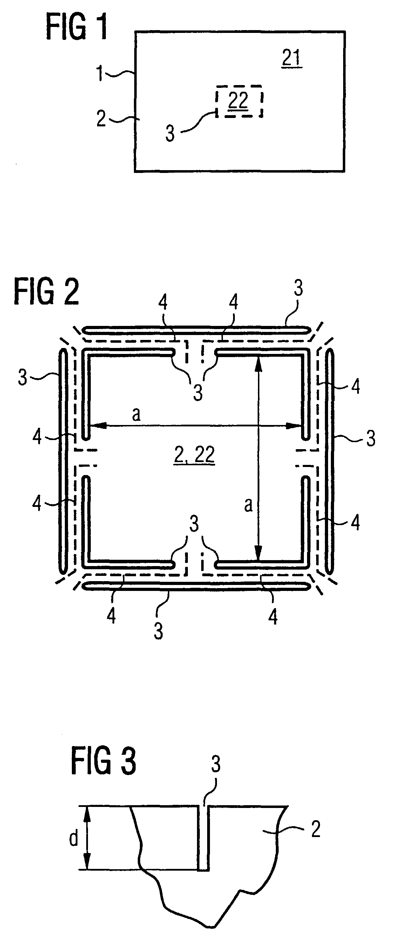

Figur 1 zeigt ein Bauelement als Schnittdarstellung in Aufsicht auf die Oberfläche eines mikromechanischen oder mikromechanisch-elektronischen Bausteins 2.

Innerhalb eines Gehäuses 1 ist ein mikromechanisch-elektronischer Baustein 2 eingeklebt. Innerhalb des Bausteins 2 sind Gräben 3 in die Oberfläche eingebracht, durch die der Baustein 2 in einen Außenbereich 21, welcher mit dem Gehäuse 1 verbunden ist, und in einen Innenbereich 22 unterteilt wird. Der Innenbereich 22 beinhaltet eine mikromechanische Struktur in Form eines Drucksensors. Im Außenbereich 21 ist eine elektronische Struktur zur Auswertung der von der mikromechanischen Struktur im Innenbereich 21 gelieferten Sensorsignale in den Baustein eingebracht. Die mikromechanische Struktur kann beispielsweise eine Membran sein.

Figur 2 zeigt einen Detailausschnitt aus Figur 1 mit dem Innenbereich 22 und mehreren Gräben 3. Die Gräben 3 umfassen den Innenbereich 22 und sind ineinander geschachtelt angebracht. Es existiert also keine gerade Oberflächenverbindung zwischen Innenbereich 22 und Außenbereich 21.

Die Gräben 3 sind so zueinander angelegt, daß vom Außenbereich 21 mehrere an der Oberfläche des Bausteins 2 liegende Pfade 4 in gefalteter Weise in den Innenbereich 22 reichen. Auf diesen Pfaden 4 sind elektrische Leitungen zur Verbindung der mikromechanischen Struktur im Innenbereich 22 mit der Auswerteelektronik im Außenbereich 21 vorhanden.

Der Innenbereich 22 beinhaltet somit den mechanisch besonders empfindlichen Bereich des Bausteins 2. Durch die Gräben 3 wird lokal eine Entkoppelung von der Verformung des Gehäuses 1 bzw. Außenbereichs 21 vorgenommen. Zug-, Druck- und Scherspannungen können sich auf der Oberfläche nicht über die Gräben 3 hinweg ausbreiten.

Die Verformung der Oberfläche des Innenbereichs 22 kann um einen Faktor von mindestens 10 verringert werden, falls der innerhalb der Gräben 3 liegende Innenbereich lateral maximal viermal so groß ist wie die Tiefe d der Gräben 3. Dabei wird die laterale Ausdehnung a zweckmäßigerweise senkrecht zur Seitenfläche der Gräben 3 ausgemessen. In diesem Falle entspricht die laterale Ausdehnung a der Kantenlänge des quadratischen Innenbereichs 22.

Mittels Ätzung oder micro-machining ist es möglich, Gräben 3 mit einer Tiefe d von einigen 100 µm, typischerweise bis zu 500 µm, herzustellen. Bei einer Tiefe d der Gräben 3 ergibt sich in unserem Falle, daß die Kantenlänge a des Innenbereichs 22 vorteilhafterweise kleiner oder gleich 2 mm ist.

Die Gräben 3 können in einem backend-Prozeß hergestellt werden. Eine besondere Anforderung an das Aspektverhältnis der Ätzung der Gräben 3 gibt es prinzipiell nicht. Der Flächenverlust durch die Gräben 3 ist meist nicht entscheidend.

Figur 3 zeigt als Schnittdarstellung in Seitenansicht einen Ausschnitt aus dem Bauteil 2 mit einem Graben 3.

In diesem Ausführungsbeispiel weist der Graben einen rechteckigen Querschnitt auf mit einer Tiefe d.

## Patentansprüche

1. Bauelement, aufweisend
- ein Gehäuse (1),
- mindestens einen mikromechanischen oder mikromechanischelektronischen Baustein (2), welcher im Gehäuse (1) befestigt ist,
**dadurch gekennzeichnet, daß**
- mindestens einen Graben (3) vorhanden ist, welcher in einer Oberfläche des Bausteins (2) eingebracht ist, und welcher den Baustein (2) in einen Außenbereich (21) und in einen Innenbereich (22) unterteilt,
- der Außenbereich (21) mit dem Gehäuse (1) mechanisch verbunden ist,
- mittels des mindestens einen Grabens (3) der Innenbereich (22) vom Außenbereich (21) mechanisch so entkoppelbar ist, daß eine vom Gehäuse (1) ausgehende Deformation nicht über die Oberfläche vom Außenbereich (21) auf den Innenbereich (21) übertragbar ist.

2. Bauelement nach Anspruch 1, bei dem
der mindestens eine Graben (3) den Innenbereich (22) umrahmt.

3. Bauelement nach Anspruch 2, bei dem
mehrere Gräben (3) im Baustein (2) so geschachtelt eingebracht sind, daß mindestens ein durchgängiger, gefalteter Pfad (4) auf der Oberfläche des Bausteins (2) zwischen Innenbereich (22) und Außenbereich (21) vorhanden ist.

4. Bauelement nach Anspruch 3, bei dem
auf dem mindestens einen Pfad (4) mindestens eine elektrische Verbindungsleitung vorhanden ist.

5. Bauelement nach einem der vorhergehenden Ansprüche, bei dem die laterale Ausdehnung (a) des Innenbereichs (22) maximal viermal so groß ist wie die Tiefe (d) des mindestens einen Grabens.

6. Bauelement nach einem der vorhergehenden Ansprüche, bei dem die Tiefe (d) des Grabens (3) im Bereich zwischen 50 µm und 500 µm liegt.

7. Bauelement nach einem der vorhergehenden Ansprüche, bei dem der Baustein (2) ein Halbleiterbaustein ist.

8. Bauelement, welches ein Drucksensor ist.

9. Verfahren zur mechanischen Entkoppelung innerhalb eines Bauelementes, bei dem
- ein mikromechanischer oder mikromechanisch-elektronischer Baustein (2), welcher innerhalb eines Gehäuses (1) angebracht ist, von mindestens einem von der Oberfläche ausgehenden Graben (3) durchzogen wird,
- mittels des mindestens einen Grabens (3) der Baustein (2) in einen Innenbereich (22) und einen mit dem Gehäuse (1) zusammenhängenden Außenbereich (21) so unterteilt wird, daß eine vom Gehäuse (1) ausgehende mechanische Deformation nicht über die Oberfläche des Bausteins (2) vom Gehäuse (1) an den Innenbereich (22) übertragen wird.
